# EUROPEAN PATENT APPLICATION

(11) **EP 1 816 435 A1**
(43) Date of publication of application: **08.08.2007**
(21) Application number: 05793610.6
(22) Date of filing: 17.10.2005
(51) Int. Cl.: G01C 21/00, G08G 1/0969, G09B 29/00

(54) **DEVICE FOR ASSISTING IN SETTING OF DESTINATION**

(30) Priority: 24.11.2004 JP 2004339338
(71) Applicant: MATSUSHITA ELECTRIC INDUSTRIAL CO., LTD., Osaka 571-8501 (JP)
(72) Inventor: KUDO, Takahiro c/o Matsushita Electric Ind. Co., Ltd., Osaka-shi, Osaka 540-6319 (JP); NAKANO, Nobuyuki c/o Matsushita Electric Ind. Co., Ltd., Osaka-shi, Osaka 540-6319 (JP); IWAMI, Ryotaro c/o Matsushita Electric Ind. Co., Ltd., Osaka-shi, Osaka 540-6319 (JP); TERADA, Tomohiro c/o Matsushita Electric Ind. Co., Ltd., Osaka-shi, Osaka 540-6319 (JP)
(74) Representative: Pautex Schneider, Nicole Véronique
(86) International application number: PCT/JP2005/019055
(87) International publication number: WO 2006/057118

(57) **Abstract**

Provided is a destination setting assistance apparatus (103) comprising: a baggage information acquisition section (204) for acquiring identification information relating to items loaded in a mobile unit; an items-to-be-carried DB storage section (201) for storing an items-to-be-carried database having written therein items-to-be-carried relating to destinations and/or categories thereof; a destination setting assistance section (206) for assisting in an operation for setting the destinations by using the identification information having been acquired by the baggage information acquisition section (204) and the items-to-be-carried database stored in the items-to-be-carried DB storage section (201) ; and a route setting section (209) for setting a route to one of the destinations, which is set with assistance of the destination setting assistance section (206).

## Description

### TECHNICAL FIELD

The present invention relates to a destination setting assistance apparatus, and more particularly to a destination setting assistance apparatus for assisting in setting a destination which is necessary for searching for a route.

### BACKGROUND ART

An in-vehicle apparatus typified by an in-vehicle navigation system may show a specific route to a destination which is set by a user. As a method for setting a destination as described above, two main types of methods are used. A first setting method, which has been conventionally adopted as a method for setting a destination by using an in-vehicle apparatus, utilizes a remote controller or a touch panel. Specifically, the in-vehicle apparatus stores multiple destination names associated with information representing categories, administrative sections, telephone numbers, or combinations thereof, and allows a user seeing a display screen to operate the remote controller or the touch panel such that a destination is searched for through a hierarchy of information. A second setting method, which is adopted for an in-vehicle apparatus in recent years, utilizes a voice recognition. Specifically, when a user utters a name or a category of a destination, the in-vehicle apparatus recognizes the name or the category having been uttered so as to automatically set a destination (see, for example, Patent Document 1).
Patent Document 1: Japanese Laid-Open Patent Publication No. 08-110238

### DISCLOSURE OF THE INVENTION

### PROBLEMS TO BE SOLVED BY THE INVENTION

However, numerous destinations are stored in the in-vehicle apparatus and further the hierarchy thereof is deep, and therefore the first setting method has a problem that it takes a long time to find a destination which is necessary for the user. On the other hand, the second setting method only requires the user to utter a name of a destination, which saves trouble for the search as required in the first setting method. However, an accuracy of the voice recognition is not 100%, and therefore the user may have to utter the destination multiple times until the in-vehicle apparatus accurately recognizes the destination.

Further, some of the in-vehicle apparatuses may have a function of allowing not only setting of the destination but also setting of multiple way-points on the way thereto so as to show a touring route to the destination through the way-points. However, when the first or the second setting method is used for the in-vehicle apparatus of the aforementioned type so as to set a destination, the setting of all the way-points and the destination becomes increasingly troublesome.

Therefore, an object of the present invention is to provide an in-vehicle apparatus which allows a user to reduce trouble for setting places.

### SOLUTION TO THE PROBLEMS

In order to attain the object mentioned above, a first aspect of the present invention is directed to a destination setting assistance apparatus which comprises: a baggage information acquisition section for acquiring identification information relating to one of items loaded in a mobile unit and items carried by a user; an items-to-be-carried DB storage section for storing an items-to-be-carried database having written therein items-to-be-carried relating to destinations and/or categories thereof; a destination setting assistance section for assisting in an operation for setting the destinations by using the identification information having been acquired by the baggage information acquisition section and the items-to-be-carried database stored in the items-to-be-carried DB storage section; and a route setting section for setting a route to one of the destinations, which is set with assistance of the destination setting assistance section.

Further, preferably, the destination setting assistance apparatus further comprises a destination information acquisition section for acquiring destination information relating to the destinations. In this case, the destination setting assistance section preferably includes: a missing item identification section for identifying a missing item for a corresponding one of the destinations to which the destination information currently acquired relates and which will be visited by one of the mobile unit and the user, by using the destination information having been acquired by the destination information acquisition section, the identification information having been acquired by the baggage information acquisition section, and the items-to-be-carried database stored in the items-to-be-carried DB storage section; and a display content determination section for determining information to be displayed, the information relating to the missing item having been identified by the missing item identification section.

Further, more preferably, the display content determination section determines that displayed is information indicating that the route through a facility at which the missing item is able to be supplied is settable. In this case, preferably, the destination setting assistance apparatus further comprises a display section for displaying the information having been determined by the display content determination section.

Further, more preferably, the route setting section sets the route through the facility at which the missing item having been identified by the missing item identification section is able to be supplied.

Further, more preferably, the display content determination section determines that displayed is information relating to the destinations and/or the categories thereof in which one of only the items loaded in the mobile unit and only the items carried by the user are required when utilized.

Further, more preferably, the route setting section sets the route to the destinations in which one of only the items loaded in the mobile unit and only the items carried by the user are required when utilized.

Further, more preferably, the destination setting assistance apparatus further comprises a destination vocabulary data storage section for storing vocabularies relating to names of the destinations. In this case, the destination setting assistance section preferably includes: a potential category selection section for selecting, from the items-to-be-carried database, at least one of the destinations which are likely to be visited by one of the mobile unit and the user, and/or at least one of the categories of the destinations which are likely to be visited by one of the mobile unit and the user, in accordance with a degree of a matching between the items-to-be-carried written in the items-to-be-carried database and one of the items loaded in the mobile unit and the items carried by the user, based on the identification information having been acquired by the baggage information acquisition section, and the items-to-be-carried database stored in the items-to-be-carried DB storage section; and a vocabulary extraction section for extracting, from the destination vocabulary data storage section, the vocabularies relating to the names of the destinations based on the destinations having been selected by the potential category selection section and/or the categories of the destinations having been selected by the potential category selection section.

Further, more preferably, the destination setting assistance apparatus further comprises a voice recognition section for recognizing a voice inputted by the user. Here, the voice recognition section assigns a high priority to the vocabularies having been extracted by the vocabulary extraction section such that the vocabularies having been extracted are easily recognized.

Further, more preferably, the destination setting assistance apparatus further comprises a display section for displaying, to the user, the destinations having been selected by the potential category selection section and/or the categories of the destinations having been selected by the potential category selection section more preferentially than destinations having not been selected and/or categories of the destinations having not been selected.

Further, more preferably, the display section has a screen on which the destinations having been selected by the potential category selection section and/or the categories of the destinations having been selected by the potential category selection section are displayed above the destinations having not been selected and/or the categories of the destinations having not been selected.

Further, more preferably, the destination setting assistance apparatus further comprises a display section for displaying, to the user, only the destinations having been selected by the potential category selection section and/or the categories of the destinations having been selected by the potential category selection section without displaying destinations having not been selected and/or categories of the destinations having not been selected.

Further, more preferably, a degree of an importance is given to each of the items-to-be-carried written in the items-to-be-carried database stored in the items-to-be-carried DB storage section. In this case, the potential category selection section selects, based on the degree of the importance given to each of the items-to-be-carried, the destinations which are likely to be visited by one of the mobile unit and the user, and/or the categories of the destinations which are likely to be visited by one of the mobile unit and the user.

Further, more preferably, the destination setting assistance apparatus further comprises a baggage history data storage section for storing baggage history data representing a history of one of the items loaded in the mobile unit and the items carried by the user. In this case, a relatively high degree of the importance is given to one of an item which is most recently loaded in the mobile unit and an item which is most recently carried by the user, among the items-to-be-carried written in the items-to-be-carried database stored in the items-to-be-carried DB storage section.

Further, more preferably, the destination setting assistance apparatus further comprises: a baggage history data storage section for storing baggage history data representing the destinations having been visited and/or the categories of the destinations having been visited, in association with one of the items loaded in the mobile unit and the items carried by the user, and an items-to-be-carried DB edition section for extracting a relationship of an item with respect to each of the destinations and/or each of the categories thereof, based on a frequency with which the item was carried for each of the destinations and/or each of the categories thereof, by using the baggage history data stored in the baggage data storage section, and editing, based on the relation ship having been extracted, the items-to-be-carried database stored in the items-to-be-carried DB storage section.

Further, a second aspect of the present invention is directed to a destination setting assistance method for assisting, by using an items-to-be-carried database in which items-to-be-carried relating to destinations and/or categories thereof are previously written, a user in setting the destinations, and the destination setting assistance method comprises: a baggage information acquisition step of acquiring identification information relating to one of items loaded in a mobile unit and items carried by the user; a destination setting assistance step of assisting in an operation for setting the destinations by using the identification information having been acquired by the baggage information acquisition step and the items-to-be-carried written in the items-to-be-carried database; and a route setting step of setting a route to one of the destinations, which is set with assistance of the destination setting assistance step.

Further, a third aspect of the present invention is directed to a computer program for assisting, by using an items-to-be-carried database in which items-to-be-carried relating to destinations and/or categories thereof are previously written, a user in setting the destinations, and the computer program comprises: a baggage information acquisition step of acquiring identification information relating to one of items loaded in a mobile unit and items carried by the user; a destination setting assistance step of assisting in an operation for setting the destinations by using the identification information having been acquired by the baggage information acquisition step and the items-to-be-carried written in the items-to-be-carried database; and a route setting step of setting a route to one of the destinations, which is set with assistance of the destination setting assistance step.

The computer program is typically recorded in a storage medium.

### EFFECT OF THE INVENTION

According to each of the aforementioned aspects, it is possible to estimate, based on information relating to items which are currently loaded in a vehicle or items which are currently carried by a user, and information relating to the items-to-be-carried required for a destination to be visited by the vehicle or the user, an operation which is preferably performed by the user, and to assist in a destination setting operation for realizing the operation. Therefore, the user is allowed to reduce trouble for setting a destination.

These and other objects, features, aspects and advantages of the present invention will become more apparent from the following detailed description of the present invention when taken in conjunction with the accompanying drawings.

### BRIEF DESCRIPTION OF THE DRAWINGS

[FIG. 1] FIG. 1 is a schematic diagram illustrating an exemplary environment in which a destination setting assistance apparatus 103 according to each of embodiments of the present invention is used.
[FIG. 2] FIG. 2 is a functional block diagram illustrating an entire structure of a destination setting assistance apparatus 103 (103a) according to a first embodiment of the present invention.
[FIG. 3] FIG. 3 is a schematic diagram illustrating an exemplary structure of an items-to-be-carried database stored in an items-to-be-carried DB storage section 201 shown in FIG. 2.
[FIG. 4] FIG. 4 is a schematic diagram illustrating an exemplary process performed by a missing item identification section 2061 shown in FIG. 2.
[FIG. 5] FIG. 5 is a schematic diagram illustrating an example of information displayed to a user by using a display section 207 shown in FIG. 2.
[FIG. 6] FIG. 6 is a flow chart showing an operation process performed by the destination setting assistance apparatus 103a shown in FIG. 2.
[FIG. 7] FIG. 7 is a functional block diagram illustrating an entire structure of a destination setting assistance apparatus 103 (103b) according to a second embodiment of the present invention.
[FIG. 8] FIG. 8 is a schematic diagram illustrating an exemplary process performed by a potential category selection section 7021 shown in FIG. 7.
[FIG. 9] FIG. 9 is a schematic diagram illustrating an exemplary structure of destination vocabulary data stored in a destination vocabulary data storage section 703 shown in FIG. 7.
[FIG. 10] FIG. 10 is a flow chart illustrating an operation process performed by the destination setting assistance apparatus 103b shown in FIG. 7.
[FIG. 11] FIG. 11 is a schematic diagram illustrating an example of a display of names of categories selected by the potential category selection section 7021 shown in FIG. 7.
[FIG. 12] FIG. 12 is a functional block diagram illustrating an entire structure of the destination setting assistance apparatus 103 (103c) according to an exemplary application of the present invention.
[FIG. 13] FIG. 13 is a schematic diagram illustrating an exemplary structure of baggage history data stored in a baggage history data storage section 1201 shown in FIG. 12.
[FIG. 14] FIG. 14 is a schematic diagram showing that the present invention is applied to a mobile terminal apparatus 1401.

### DESCRIPTION OF THE REFERENCE CHARACTERS

- 101: RDID tag
- 102: tag reader
- 103, 103a, 103b, 103c: destination setting assistance apparatus
- 201: items-to-be-carried DB storage section
- 202: map data storage section
- 203: shop DB storage section
- 204: baggage information acquisition section
- 205: destination acquisition section
- 206, 702: destination setting assistance section
- 2061: missing item identification section
- 2062: display content determination section
- 7021: potential category selection section
- 7022: vocabulary extraction section
- 207: display section
- 208: input section
- 209: route setting section
- 701: voice input section
- 703: destination vocabulary data storage section
- 704: voice recognition section
- 1201: baggage history data storage section
- 1401: mobile terminal apparatus

### BEST MODE FOR CARRYING OUT THE INVENTION

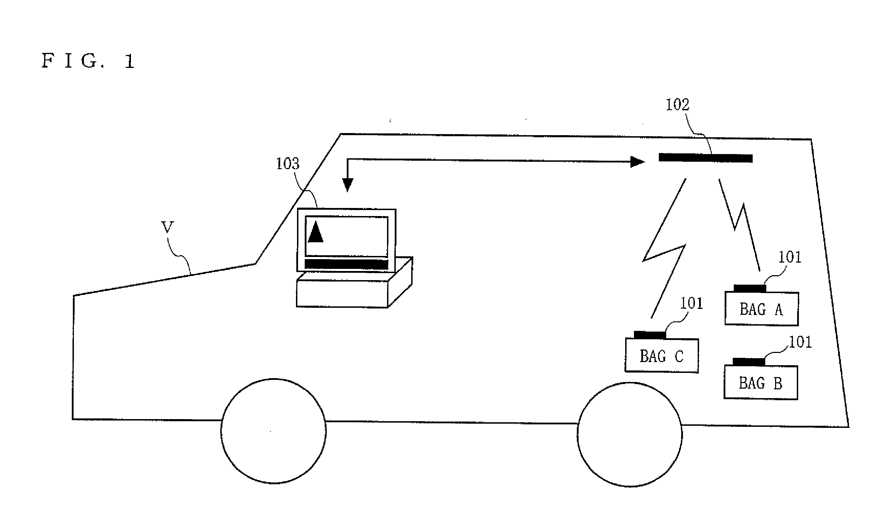

FIG. 1 is a schematic diagram illustrating an environment in which a destination setting assistance apparatus 103 according to embodiments of the present invention is used. FIG. 1 shows several bags (bags A, B, and C are shown) which are used by a user and loaded into a vehicle V. Further, each of the bags has attached thereto an RFID tag 101 for storing identification information used for identifying the bag to which the corresponding RFID tag 101 is attached. The identification information represents, for example, an ID which is specific to and previously stored in the RFID tag 101, or a bag name which is written in the RFID tag 101.

FIG. 1 also shows a tag reader 102 and the destination setting assistance apparatus 103 which are mounted in the vehicle V.

After the bags have been loaded into the vehicle V, the tag reader 102 performs radio communication with the RFID tag 101 attached to each of the bags so as to read the identification information which is stored in the RFID tag 101 at a predetermined time. Further, the tag reader 102 transmits the identification information having been read to the destination setting assistance apparatus 103 which has a wired or wireless connection to the tag reader 102. Here, the predetermined time typically represents a time at which each of the RFID tags 101 enters a communication range of the tag reader 102, a time at which an engine of the vehicle V is started, or a time at which the user of the vehicle V performs an operation required for reading the ID. The communication range represents such a range as to be able to cover an interior of the vehicle V.

The destination setting assistance apparatus 103 is typically a navigation system mounted in the vehicle V. The destination setting assistance apparatus 103 as described above estimates a destination of the user based on at least one piece of identification information transmitted by the tag reader 102, so as to set a destination. Hereinafter, each of the embodiments of the destination setting assistance apparatus 103 will be described.

### (First Embodiment)

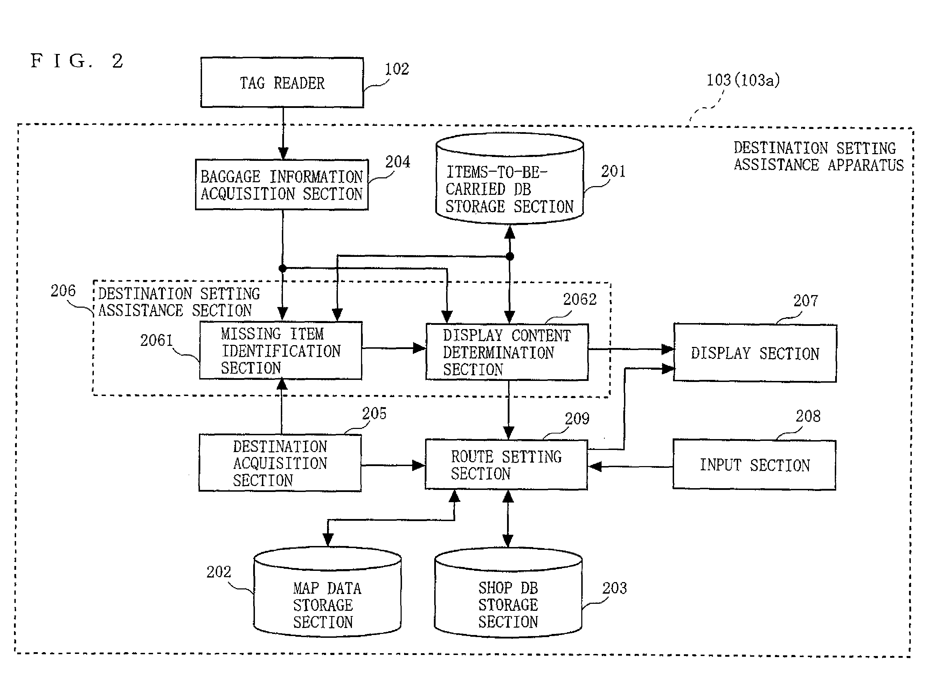

FIG. 2 is a block diagram illustrating an entire structure of the destination setting assistance apparatus 103 (hereinafter, referred to as a destination setting assistance apparatus 103a) according to a first embodiment of the present invention. As shown in FIG. 2, provided are an items-to-be-carried DB storage section 201, a map data storage section 202, a shop DB storage section 203, a baggage information acquisition section 204, a destination acquisition section 205, a destination setting assistance section 206, a display section 207, an input section 208, and a route setting section 209.

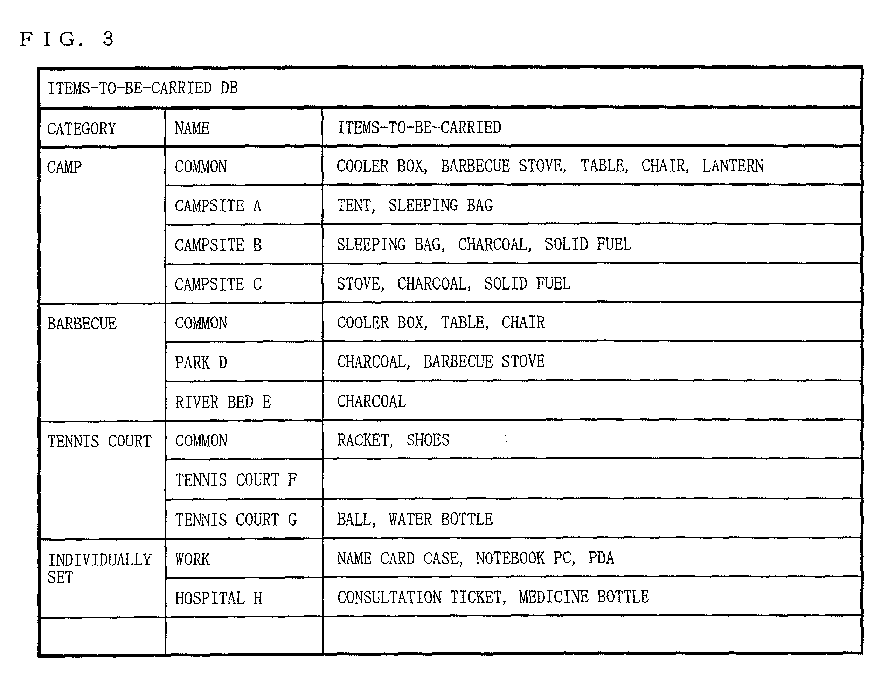

As shown in FIG. 3, the items-to-be-carried DB storage section 201 stores, for each destination category and each destination name, a database (hereinafter, referred to as an items-to-be-carried DB (Database)) of required items-to-be-carried (that is, bags). In the present embodiment, the destination refers to a place which the user can stay in or stopover at, typically including a facility, a shopora sightseeing spot. Further, the category refers to a category abstractly representing a certain group of the destinations. In FIG. 3, for example, three facilities, "campsite A", "campsite B", and "campsite C", are written as destinations belonging to "camp" representing an exemplary category, and the items-to be-carried required for each of the destinations are written. In the present embodiment, for example, "tent" and "sleeping bag" are written as the items-to-be-carried for "campsite A", "sleeping bag", "charcoal" and "solid fuel" are written as the items-to-be-carried for "campsite B", and "stove", "charcoal" and "solid fuel" are written as the items-to-be-carried for "campsite C". Further, the items-to-be-carried required for all the facilities, that is, the items-to-be-carried required for the category "camp" are written in a column of "common". In the present embodiment, for example, "cooler box", "barbecue stove", "table", "chair", and "lantern" are written in the column of "common".

Since the required items-to-be-carried may differ depending on the destination, not only the items-to-be--carried for each "category" but also the items-to-be-carried for each destination are written in the items-to-be-carried DB as shown in FIG. 3. For example, it is possible to locally purchase charcoal and solid fuel in the campsite A, and therefore "charcoal" and "solid fuel" are not written as the items-to-be-carried for "campsite A" in the items-to-be-carried DB as shown in FIG. 3. However, it is impossible to locally purchase charcoal and solid fuel in the campsite B, and therefore they are written as the items-to-be-carried for "campsite B" as shown in FIG. 3, for example.

In FIG. 3, for example, the items-to-be-carried common to each category and the items-to-be-carried specific to each destination are separately written. For example, it may be possible to rent an item such as a stove in the campsite C while it may be impossible to rent the same in the campsite B. Therefore, it is preferable that as shown in FIG. 3, for example, the items-to-be-carried depending on destinations are separately written for each destination, and the items-to-be-carried common to all the destinations of each category are collectively written, because a data size of the items-to-be-carried DB can be reduced or searching the items-to-be-carried DB can be facilitated.

For example, the items-to-be-carried DB as described above indicates that "cooler box", "barbecue stove", "table", "chair" and "lantern", which are "common" items-to-be-carried, and "sleeping bag", "charcoal" and "solid fuel", which are the items-to-be-carried for "campsite B", are required for visiting "campsite B". Further, in order to visit "tennis court F" representing another exemplary destination, only "racket" and "shoes", which are "common" items-to-be-carried, are required because no items-to-be-carried are written in "tennis court F".

Further, the items-to-be-carried DB may be constructed such that each user can individually register destinations and items-to-be-carried thereof. In an example shown in FIG. 3, "name card case", "notebook PC" and "PDA (Personal Digital Assistant)" are registered as the items-to-be-carried for a destination "work" which is specific to the user, and "consultation ticket" and "medicine bottle" are registered for "hospital H" representing another destination. Thus, the items-to-be-carried DB can store necessary items which are different among individuals.

The items-to-be-carried DB may be stored in the items-to-be-carried DB storage section 201, or the destination setting assistance apparatus 103a may acquire an items-to-be-carried DB created by a certain provider by using a network or a memory card, and store the items-to-be-carried DB having been acquired in the items-to-be-carried DB storage section 201. Further, the items-to-be-carried DB may be constructed so as to be able to be edited by a user. A user can perform manual registration in "category", "destination" and "items-to-be-carried" of the items-to-be-carried DB.

Alternatively, the registration may be performed in the following manner. Specifically, a user loads, into the vehicle V, items-to-be-carried (each having the RFID tag 101) determined by the user when the user visits a certain destination I. Thereafter, the user registers the destination A in the items-to-be-carried DB through, for example, key input, and further performs a predetermined operation. Thus, the destination setting assistance apparatus 103a recognizes that bags which are currently loaded in the vehicle V are necessary items for the destination A, and instructs the tag reader 102 to read the identification information from each of the RFID tags 101. In response to the instruction, the tag reader 102 reads the identification information from each of the RFID tags 101 attached to the bags and transmits the identification information to the destination setting assistance apparatus 103a. The destination setting assistance apparatus 103a registers, in the items-to-be-carried DB, the identification information which is currently read as the items-to-be-carried for the destination A having been registered. Through the aforementioned process, the user can additionally register, in the items-to-be-carried DB, even a destination and items-to-be-carried thereof which have not been previously registered in the items-to-be-carried DB by only registering the destination in the destination setting assistance apparatus 103a and performing the predetermined operation.

Still alternatively, the destination setting assistance apparatus 103a may additionally register a destination and items-to-be-carried in the items-to-be-carried DB in the following manner. Firstly, the destination setting assistance apparatus 103a stores, each time a certain destination is visited, a history of the identification information of the bags which are loaded in the vehicle V for the certain destination. When the number of times the certain destination was visited reaches a predetermined value, the destination setting assistance apparatus 103a additionally stores, in the items-to-be-carried DB, the certain destination and bags which were loaded for the certain destination in the vehicle V for the number of times representing a predetermined percentage or more. For example, when destination A has been visited ten times, one or more bags, which were loaded in the vehicle V nine times representing more than eighty percent, are registered in the items-to-be-carried DB.

Refer to FIG. 2 again. The map data storage section 202, which may be a well-known one, stores at least data necessary for a route search described below.

Further, the shop DB storage section 203 stores at least a database (hereinafter, referred to as a shop DB) having written therein information relating to a name, representative position information and commodities of a shop at which a predetermined item described below can be purchased. The route setting section 209 described below can search the aforementioned shop DB so as to extract information relating to a shop at which a missing item can be purchased by using the missing item as a search key.

The baggage information acquisition section 204 acquires, from each of the RFID tags 101 attached to the bags loaded in the vehicle V, the identification information having been read by the tag reader 102.

The destination acquisition section 205 acquires information (hereinafter, referred to as destination information) from which a destination to be visited can be identified when a user loads bags into the vehicle V. The destination information is typically obtained as information specified by a user operating a destination setting function which has been preset in the destination setting assistance apparatus 103a.

Alternatively, the destination acquisition section 205 may acquire, when, for example, schedule information of a user can be acquired in cooperation with scheduler software, the destination information in accordance with the schedule information which can be acquired. For example, when the scheduler indicates that "campsite B" is scheduled to be visited on April 25 (Sunday), and a date on which the user uses the destination setting assistance apparatus 103a is April 25 (Sunday), the destination acquisition section 205 may automatically acquire "campsite B" as the destination information. Further, when, for example, the destination setting assistance apparatus 103a is indirectly or directly connected to a network through a mobile telephone, the destination acquisition section 205 can acquire the schedule-based destination information through the network from a terminal device, such as a personal computer, positioned inside or outside the vehicle V. As another example, the destination acquisition section 205 may be constructed so as to read, as the destination information, the schedule information stored in a storage medium, such as a memory card or a compact hard disc drive, connected to a terminal device.

Still alternatively, as disclosed in Japanese Laid-Open Patent Publication No. 11-149596, the destination acquisition section 205 may store previous traveling history information of a user so as to predict a destination based on a previous event occurring at a start point and/or a time and date similar to the current start point and/or time and date, thereby acquiring the predicted destination as current destination information.

The destination setting assistance section 206 includes a missing item identification section 2061 and a display content determination section 2062 so as to assist in setting a destination to be visited by the vehicle V.

Firstly, the missing item identification section 2061 identifies the bags which are currently loaded in the vehicle V based on the identification information from the baggage information acquisition section 204. Further, the missing item identification section 2061 accesses the items-to-be-carried DB stored in the items-to-be-carried DB storage section 201 so as to identify the items--to-be-carried required for the destination indicated by the destination information from the destination acquisition section 205. Thereafter, the missing item identification section 2061 determines whether or not all the items-to-be-carried required for the current destination have been loaded in the vehicle V. In other words, the missing item identification section 2061 determines whether or not there is a missing item for the current destination, and when there is a missing item, the missing item identification section 2061 identifies the item missing from items written in the items-to-be-carried DB.

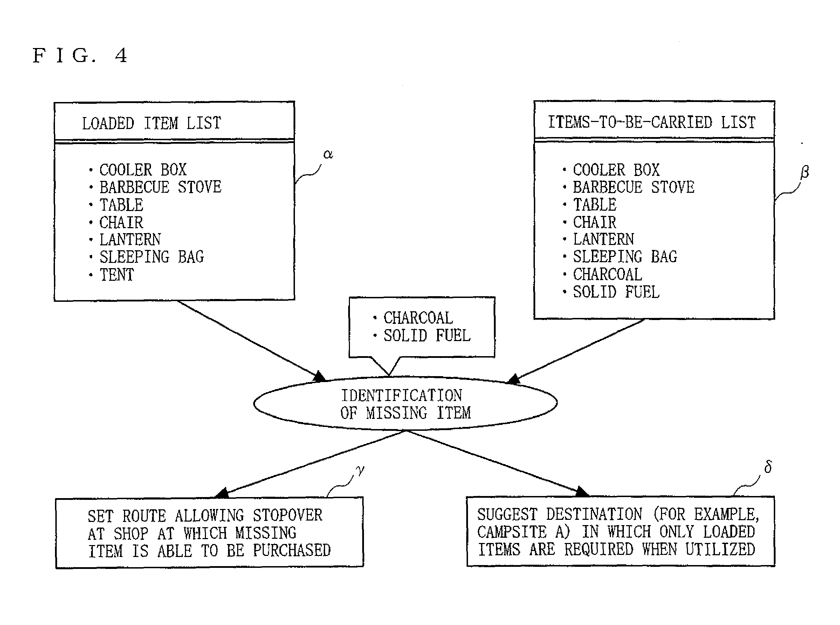

Here, a specific example of a process performed by the missing item identification section 2061 will be described with reference to FIG. 4. The missing item identification section 2061 creates a list illustrated in a frame α of FIG. 4 as a currently-loaded-items list based on the identification information from the baggage information acquisition section 204. Further, when the destination information from the destination acquisition section 205 indicates "campsite B", the missing item identification section 2061 extracts necessary items-to-be-carried from the column "common" to the category "camp" and the column specific to "campsite B" in the items-to-be-carried DB shown in FIG. 3, so as to create an items-to-be-carried list illustrated in frame β of FIG. 4. The missing item identification section 2061 compares the loaded-items list with the items-to-be-carried list, which are illustrated in FIG. 4, and determines that "charcoal" and "solid fuel" are not found in any bags of the user and are missing from necessary items for "campsite B"

Further, the display content determination section 2062 determines, based on the determination made by the missing item identification section 2061, information content to be displayed by the display section 207 which is typified by a display and/or a speaker. When the missing item identification section 2061 determine that there is no missing item, the display content determination section 2062 simply instructs the route setting section 209 described below to start a route guidance so as to go directly to the destination indicated by the destination information from the destination acquisition section 205. On the other hand, when it is determined that there is a missing item, the display content determination section 2062 displays, to the user, information relating to the missing item identified by the missing item identification section 2061 by using the display section 207, and further displays to the user some options relating to the subsequent actions.

Here, the options include setting a route which allows a stopover at a shop at which the missing item can be purchased so as to be supplemented on the way to the destination as illustrated in frame γ of FIG. 4, and resetting, as a new destination, a facility in which only the items which the user has loaded in the vehicle V are required when utilized, as illustrated in frame 6 of FIG. 4. For example, a comparison between the loaded-items list illustrated in frame α of FIG. 4 and the items-to-be-carried DB shown in FIG. 3 indicates that the facility in which only the currently-loaded-items are required when utilized is "campsite A", and therefore a potential new destination corresponds to "campsite A". When there are a plurality of facilities which can be utilized, the display content determination section 2062 displays all the potential destinations to the user by using the display section 207 so as to allow the user to select one of the potential destinations. Further, the display content determination section 2062 may suggest the destination in consideration of, for example, a distance to each of the facilities or the number of times the user has visited each of the facilities.

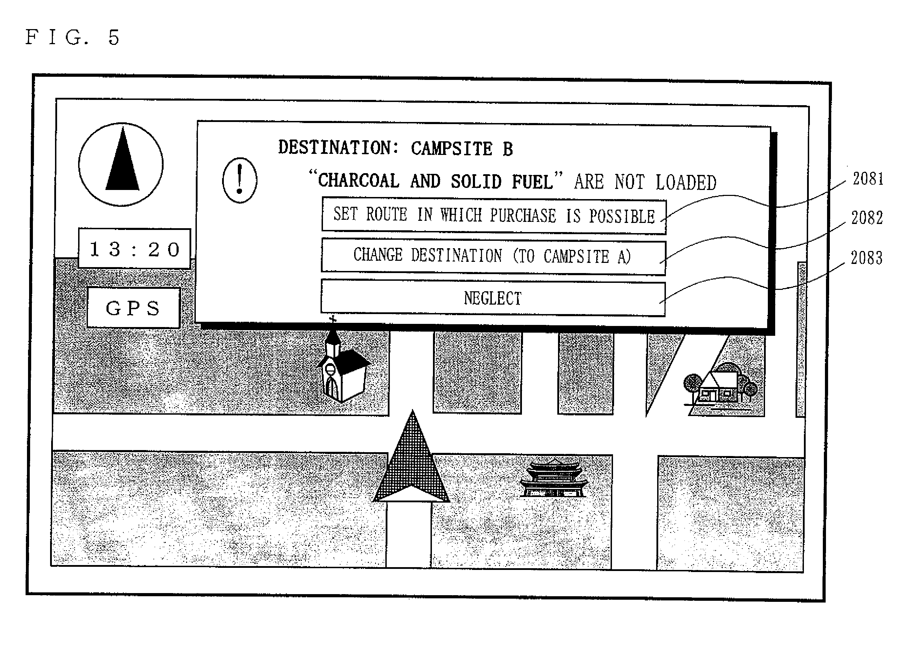

Exemplary information displayed to the user in accordance with the aforementioned determination will be described with reference to FIG. 5. It is assumed that in FIG. 5 information to the user is displayed on a display as an example of the display section 207. Further, in FIG. 5, a first button 2081, which is graphical and indicates "set a route in which purchase is possible", is assigned with a command for setting a route to a shop at which the missing item can be purchased or setting a touring route through the shop to the destination indicated by the destination information from the destination acquisition section 205. Further, a second button 2082, which is graphical and indicates "change a destination", is assigned with a command for changing a destination to a facility in which only the loaded items are required when utilized. Further, a third button 2083, which is graphical and indicates "neglect", is assigned with a command for changing destination setting although there is a missing item.

The input section 208, operated by a user, is a device for supplying an input to the destination setting assistance apparatus 103a. In the present embodiment, the input section 208 allows the user to mainly designate an option displayed by the display section 207. For example, when the options shown in FIG. 5 are provided, the input section 208 is a device (for example, trackball) operable to click the first to the third buttons 2081 to 2083.

The route setting section 209 sets a route to the destination which is currently set and provides a route guidance. Here, the destination used by the route setting section 209 does not depend on the destination information from the destination acquisition section 205 but depends on an instruction provided by the display content determination section 2062 when the missing item identification section 2061 determines that there is no missing item, or depends on an option designated by the user operating the input section 208. A process performed by the route setting section 209 will be described below in detail.

Initially, when it is determined that there is no missing item, or when the third button 2083 shown in FIG. 5 is clicked, the route setting section 209 uses map data stored in the map data storage section 202 to search for a route to the destination indicated by the destination information from the destination acquisition section 205, and thereafter provides, by using the display section 207, the user with a guidance for guiding the user to the destination in accordance with the route having been found. A start point of a route to be searched for may be a current position of the vehicle V or an arbitrary point designated by the user.

Next, when the missing item identification section 2061 determines that there is a missing item, and the first button 2081 shown in FIG. 5 is clicked, the route setting section 209 performs the following process. Firstly, the route setting section 209 acquires, from the display content determination section 2062, information relating to the missing item, and uses the information as a search key to search the shop DB stored in the shop DB storage section 203. The route setting section 209 acquires at least one shop resulting from this search and the respective representative position information thereof, and thereafter searches for, by using map data, a route to the destination indicated by the destination information through the shop having been acquired, as illustrated in frame γ of FIG. 4. For example, comparison between items in frame α shown in FIG. 4 with items in frame β shown in FIG. 4 indicates that the missing item is "charcoal" and "solid fuel", and therefore the route setting section 209 searches the shop DB for shops at which the missing items can be purchased. Thereafter, the route setting section 209 provides, by using the display section 207, the user with a guidance for guiding the user to the destination in accordance with the route having been found. Thus, the user can purchase the missing items at the shops and thereafter go to the destination. Preferably, the shop to be found is as near to the route, between the start point and the destination, as possible such that the vehicle V can stop over at the shop. In order to find such a shop, for example, a degree of nearness to the route is used as a criterion for finding the shop. Here, the degree of nearness represents an index indicating an increase in traveling distance and/or traveling time, which is caused by going by way of the shop. As described above, the route setting section 209 may search for a route up to the shop having been found.

Lastly, when the missing item identification section 2061 determines that there is a missing item and the second button 2082 shown in FIG. 5 is clicked, the route setting section 209 performs the following process. Specifically, as illustrated in frame δ of FIG. 4, the route setting section 209 searches for a route to a new destination provided by the display content determination section 2062 or a route to a new destination selected by the user from among a plurality of potential destinations displayed by the display content determination section 2062. For example, in "campsite A", only the items illustrated in frame α of FIG. 4 are required when utilized, and therefore the route setting section 209 searches for a route to the "campsite A". Thereafter, the route setting section 209 provides, by using the display section 207, the user with a guidance for guiding the user to the destination in accordance with the route having been found. Thus, the user is able to visit a destination in which only the currently loaded bags are required when utilized.

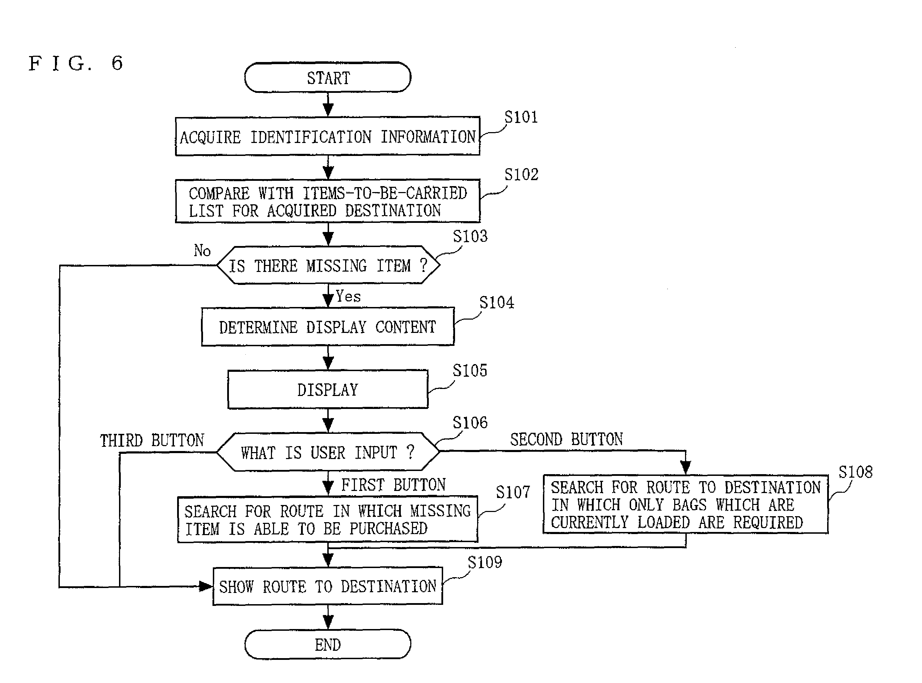

Next, an operation performed by the destination setting assistance apparatus 103a having the aforementioned features will be described with reference to a flow chart shown in FIG. 6. In FIG. 6, when the tag reader 102 reads the identification information for identifying the items having been loaded in the vehicle V, the baggage information acquisition section 204 acquires the identification information from the tag reader 102 (step S101).

The missing item identification section 2061 creates, based on the destination information from the destination acquisition section 205 and the items-to-be-carried DB stored in the items-to-be-carried DB storage section 201, a list of items-to-be-carried required for the destination having been set. Further, the missing item identification section 2061 compares the items-to-be-carried list having been created with the identification information having been acquired by the baggage information acquisition section 204 (step S102, additionally refer to FIG. 4) so as to determine whether or not there is an item missing from items to be loaded (step S103).

When the determination made in step S103 is No, the route setting section 209 searches for a route to the destination indicated by the destination information from the destination acquisition section 205 so as to provide a route guidance in accordance with the route having been found (step S109).

On the other hand, when the determination made in step S103 is Yes, the display content determination section 2062 determines information content to be displayed to the user (step S104), and displays the information content to the user by using the display section 207 (step S105, further refer to FIG. 5).

Following step S105, when the input section 208, which is in a state of waiting for an input from the user, receives the input, the route setting section 209 determines a content having been inputted from the user (step S106).

Firstly, when the third button 2083 shown in FIG. 5 is operated, the route setting section 209 searches for a route to the destination indicated by the destination information from the destination acquisition section 205, and thereafter provides, by using the display section 207, the user with a guidance for guiding the user to the destination in accordance with the route having been found, as described above (step S109).

Next, when the first button 2081 shown in FIG. 5 is clicked, the route setting section 209 searches the shop DB for a shop by using the missing item as the search key as described above so as to search for a route to the destination through the shop having been found (step S107). Thereafter, the route setting section 209 provides, by using the display section 207, the user with a guidance for guiding the user to the destination in accordance with the route having been found (step S109). Thus, the user can purchase the missing item at the shop and thereafter go to the destination.

Further, when the second button 2082 shown in FIG. 5 is operated, the route setting section 209 searches for a route to a new destination as described above (step S108). Thereafter, the route setting section 209 provides, by using the display section 207, the user with a guidance for guiding the user to the destination in accordance with the route having been found (step S109). Thus, the user is able to visit the destination in which only the currently loaded bags are required when utilized.

As described above, according to the present embodiment, when a user goes out by the vehicle V, whether or not bags necessary for a destination have been loaded in the vehicle V is determined. When the determination indicates that there is a missing item, the destination setting assistance apparatus 103a automatically searches for a route to a destination through a shop at which the user can purchase the missing item when, for example, the first button 2081 is simply operated, or automatically searches for a route to a destination in which, when utilized, only the currently loaded bags are required when, for example, the second button 2092 is simply operated. The aforementioned search allows a trouble for setting a way-point and/or a destination to be saved, thereby preventing the user from being bothered with such a trouble.

Further, the present embodiment has an additional technical effect that the destination setting assistance apparatus can notify a user that there is a missing item for a destination having been set by the user, thereby preventing the user from visiting the destination without noticing the missing item (an item left behind), and then preventing the user from feeling inconvenience at the destination.

According to the present embodiment, the route setting section 209 searches for (1) a route to the destination having been originally set by the user through a shop at which a missing item can be purchased or (2) a route to a destination corresponding to a new facility in which only items loaded in the vehicle V are required when utilized. However, the present invention is not limited thereto. When there is no facility in which only items loaded in the vehicle V are required when utilized, the destination setting assistance section 206 may suggest a facility corresponding to the destination, based on whether or not a shop at which the missing item for each of the facilities can be purchased is located near each of the routes from the start point to each of the facilities. That is, a determination criterion may be used so as to minimize a distance from each of the routes, which will be increased by going by way of the shop. Further, the destination setting assistance section 206 may suggest a facility for which the missing items are least, or a facility at which the missing item can be most easily purchased. For example, such a facility includes a facility around which a shop providing the missing item at low cost is located, and a facility around which a lot of shops handling the missing items are located.

Further, according to the present embodiment, the route setting section 209 searches for a shop at which the missing item can be purchased. However, a shop or a public facility at which rental thereof is possible or a friend or an acquaintance who is likely to lend the missing item may be searched for. That is, the route setting section 209 may search for a spot at which the missing item can be supplied. Further, when the missing item is an item belonging to a certain person, the route finding section 209 can be used to set a route through a spot at which the certain person can be contacted. Further, the missing item is not necessarily goods but it may be a person. In this case, the items-to-be-carried DB storage section 201 associates a name of the facility and/or the category thereof with an accompanying person, and the shop DB storage section 203 sets a route through a spot at which the accompanying person is picked up.

Further, the items-to-be-carried DB may store information (hereinafter, referred to as quantity information) for specifying a quantity of each of the items. In an example shown in FIG. 3, "chair" is written in the "common" column for the category"barbecue",andtheitem-to-be-carried DB may register "four" as the quantity information for the chair. In this case, if the number of chairs loaded in the vehicle V is three, the route setting section 209 sets a route through a spot at which one chair can be supplied or sets, as a destination, a facility in which no chair is required to be carried.

Further, according to the present embodiment, the display section 207 displays options to the user in a visual manner in the example shown in FIG. 5. However, the present invention is not limited thereto. The display section 207 may provide options as voice information.

Further, according to the present embodiment, the input section 208 is, for example, a device operable to click the first to the third buttons 2081 to 2083. The present invention is not limited thereto. For example, a voice input device may be used. In this case, an option selected by a user is identified through voice recognition.

### (Second Embodiment)

When the destination information can be acquired, the destination setting assistance apparatus 103a according to the first embodiment described above sets, based on the identification information relating to items loaded in the vehicle by the user, a route through a shop at which the missing item can be supplied or suggests a facility in which only the currently loaded items are required when utilized so as to allow a destination to be reset, thereby assisting a user in setting a destination.

On the other hand, according to the second embodiment described below, the destination setting assistance apparatus 103a will be described which assists, when a user does not set a destination, the user in setting a destination based on information relating to items having been loaded. Specifically, when a user inputs, by voice, a name of a destination or a category thereof to the destination setting assistance apparatus 103a, the destination setting assistance apparatus 103a according to the present embodiment selects vocabularies to be obtained by recognizing the voice, based on a possibility that a facility or a category represented by each of the vocabularies is designated as a destination, so as to rank the vocabularies, thereby preventing erroneous recognition and assisting the user in smoothly setting a destination. The destination setting assistance apparatus 103a as described above effectively provides a method for assisting a user in setting a destination even when the destination information as described in the first embodiment cannot be acquired.

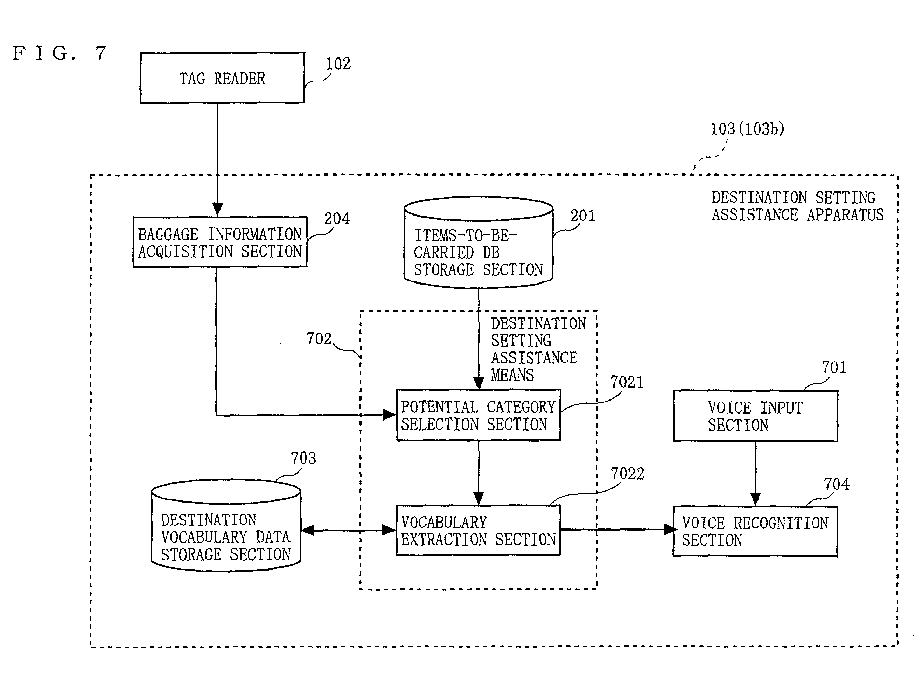

FIG. 7 is a block diagram illustrating an entire structure of the destination setting assistance apparatus 103 (hereinafter, referred to as a destination setting assistance apparatus 103b) according to the second embodiment. In FIG. 7, the destination setting assistance apparatus 103b is the same as the destination setting assistance apparatus 103a as described above except that the destination setting assistance apparatus 103b has a voice input section 701 and a destination setting assistance section 702 instead of the input section 208 and the destination setting assistance section 206, and additionally includes a destination vocabulary data storage section 703 and a voice recognition section 704. The destination setting assistance apparatuses 103a and 103b have the same structure except for the aforementioned components. In FIG. 7, the same reference numerals as those used in FIG. 2 denote the components corresponding to those shown in FIG. 2, and the description thereof is not given.

The voice input section 701 is a device (for example, a microphone) for allowing a user to input his or her voice.

The destination setting assistance section 702 includes a potential category selection section 7021 and a vocabulary extraction section 7022 as shown in FIG. 7 so as to select a potential destination.

The potential category selection section 7021 uses the identification information acquired by the baggage information acquisition section 204 and the items-to-be-carried DB stored in the items-to-be-carried DB storage section 201 so as to select, as a potential category, a category of a destination of which the necessaryitems-to-be-carried match, to a high degree, items which are currently loaded in the vehicle V. Here, one of the reasons a degree of matching is used as a determination criterion is that the more closely the items loaded in the vehicle V match the items-to-be-carried required for a category, the higher the possibility that a user will go to a spot represented by the category is. However, the present invention is not limited thereto, and the determination criterion may depend on another reason.

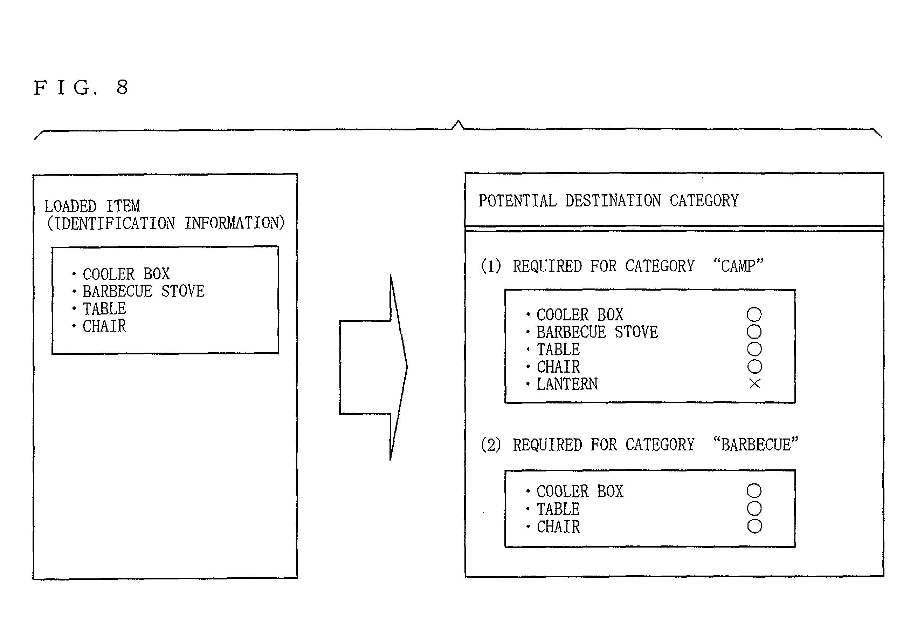

Hereinafter, a specific example of a process performed by the potential category selection section 7021 will be described with reference to FIG. 8. On the left hand in FIG. 8, a list of the loaded items represented by the identification information acquired by the baggage information acquisition section 204 is schematically illustrated. The potential category selection section 7021 creates, based on the identification information acquired by the baggage information acquisition section 204, such a list of the items having been loaded. Further, the potential category selection section 7021 accesses the items-to-be-carried DB (refer to FIG. 3.) so as to search the same for items contained in the created list of the items having been loaded. More specifically, the potential category selection section 7021 determines whether or not the items listed in the list of the items having been loaded partially or completely match the items-to-be-carried written in the "common" column of each category in the items-to-be-carried DB. The potential category selection section 7021 selects, as a potential destination category, a category of which the items-to-be-carried match items in the list to a higher degree of matching than a predetermined reference. In a case where, for example, the created list represents the items having been loaded as shown in FIG. 8, the category having the higher degree of matching represents "camp" and "barbecue" (refer to FIG. 3). In this case, the potential category selection section 7021 selects, as potential destination categories, "camp" and "barbecue" as shown on the right hand in FIG. 8.

In a case where a plurality of potential destination categories are selected, the potential category selection section 7021mayassign, to the respective potential categories, priorities based on the degree of matching. An example where the priorities are assigned as described above will be specifically described. While the loaded items listed on the left hand in FIG. 8 covers all the items-to-be-carried indicated in the "common" column of the category "barbecue", the loaded items do not include "lantern", which is missing from the items-to-be-carried for the category "camp", as shown on the right hand in FIG. 8. Accordingly, since the degree of matching between the loaded items and the items-to-be-carried is higher for the category "barbecue", the potential category selection section 7021 determines that "barbecue" is ranked first, and "camp" is ranked second as a destination category which is likely to be set by a user. As describe above, the priorities are assigned, based on a possibility of each of the destination categories being designated by the user, to the plurality of selected potential categories having the higher degrees of matching, thereby enabling the destination setting assistance apparatus 103b to provide information which interests the user with enhanced accuracy.

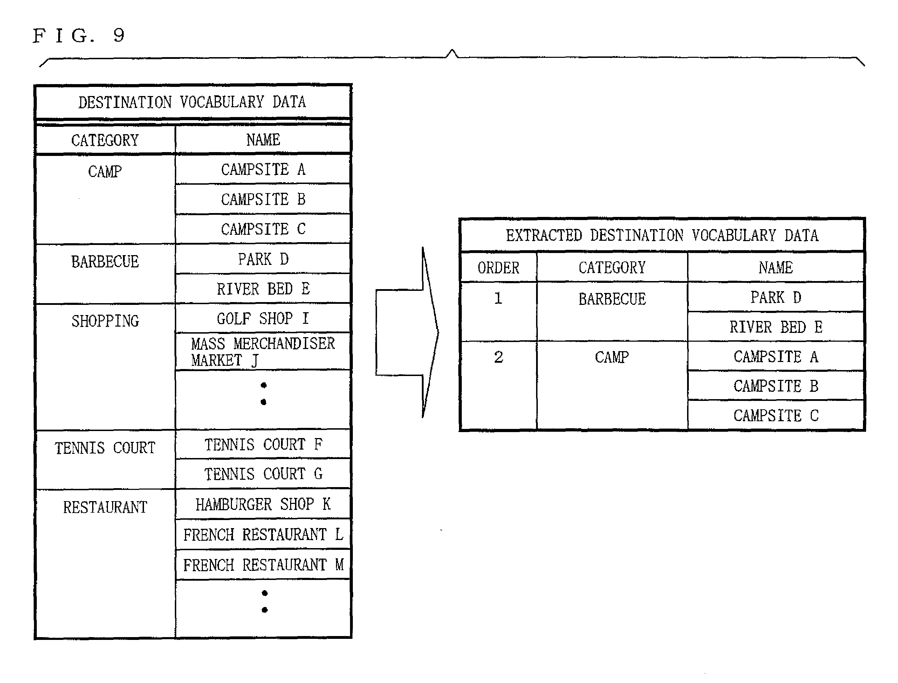

Here, for the convenience of description, the destination vocabulary data storage section 703 shown in FIG. 7 will be described. The destination vocabulary data storage section 703 stores destination vocabulary data required for allowing a user to search for or set a destination. More specifically, as shown in FIG. 9, the destination vocabulary data storage section 703 stores not only vocabularies representing destinations but also at least information of categories to which the respective destinations belong. Although the destination vocabulary data storage section 703 may store vocabularies other than those representing the categories or the names of the facilities stored in the items-to-be-carried DB storage section 201, the items-to-be-carried DB storage section 201 may double as the destination vocabulary data 703 when both the storage sections 201 and 703 store the same collection of the vocabularies.

The vocabulary extraction section 7022 extracts the vocabularies from the destination vocabulary data storage section 703 based on the potential destination categories selected by the potential category selection section 7021. Accordingly, the vocabularies extracted based on the potential destination categories represent names of the categories of potential destinations which a user is likely to visit or names of the facilities belonging to the categories. In an example shown in FIG. 8, the first priority is assigned to the potential destination category representing "barbecue" and the second priority is assigned to "camp". Therefore, the vocabulary extraction section 7022 extracts vocabularies representing the destinations shown on the right hand in FIG. 9 from the destination vocabulary data shown on the left hand in FIG. 9. The assigned priorities are utilized such that the voice recognition section 704 described below recognizes a voice of the user with enhanced accuracy.

Refer to FIG. 7 again. In FIG. 7, the voice recognition section 704 recognizes a voice inputted by a user through the voice input section 701. The voice recognition section 704 utilizes, when recognizing the voice, information relating to the vocabularies (refer to the right hand in FIG. 9) of the destinations extracted by the vocabulary extraction section 7022. That is, the vocabularies having been extracted and information relating to the priorities assigned thereto are used such that the vocabularies having been extracted are easily recognized. A sound model relating to a sound characteristic of the user uttering a voice and a language model obtained by regularizing a linguistic connection are typically used for the voice recognition. A degree of possibility based on a sound and/or a language is given to a sound representing the uttered voice as a score and a vocabulary of a higher score is selected as a recognition result. At this time, each of the vocabularies extracted by the vocabulary extraction section 7022 may have the score to which a weight is assigned, so as to be preferentially selected. Further, when the weight is assigned in consideration of the priority assigned by the vocabulary extraction section 7022, the vocabulary of a higher priority is increasingly preferentially selected.

The vocabulary corresponding to a voice which is likely to be uttered by the user of the destination setting assistance apparatus 103b having the aforementioned features may represent a name relating to a destination which the user intends to visit or a name of a category thereof. When the vocabulary extraction section 7022 previously extracts the vocabularies relating to the potential destination categories estimated from the loaded items so as to allow the voice recognition section 704 to utilize the vocabularies, a recognition accuracy is increased. When the recognition accuracy is low, the user needs to utter the voice multiple times until the accurate recognition is performed. However, the increase in recognition accuracy can decrease the number of times the voice is uttered, and it is possible to assist in setting a destination.

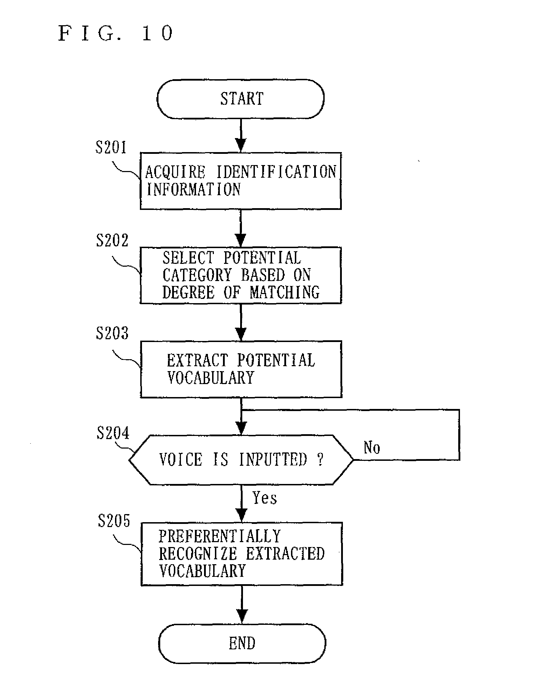

Next, an operation performed by the destination setting assistance apparatus 103b having the aforementioned features will be described with reference to a flow chart shown in FIG. 10. In FIG. 10, the baggage information acquisition section 204 acquires the identification information in a similar manner as step S101 (see FIG. 6) (step S201).

The potential category selection section 7021 searches for the items which are currently loaded in the vehicle V and included in the items-to-be-carried for each destination, based on the identification information having been acquired in step S201 and the items-to-be-carried DB stored in the items-to-be-carried DB storage section 201 so as to select at least one potential destination category in a manner as described above (step S202).

The vocabulary extraction section 7022 extracts, from the destination vocabulary data storage section 703, the vocabularies relating to the potential categories having been currently selected by the potential category selection section 7021 in a manner as described above (step S203).

The voice recognition section 704 determines whether or not the user has inputted a voice to the voice input section 701. When the input has been made (Yes in step S204), a recognition result is outputted based on the priorities assigned to the vocabularies extracted by the vocabulary extraction section 7022 (step S205).

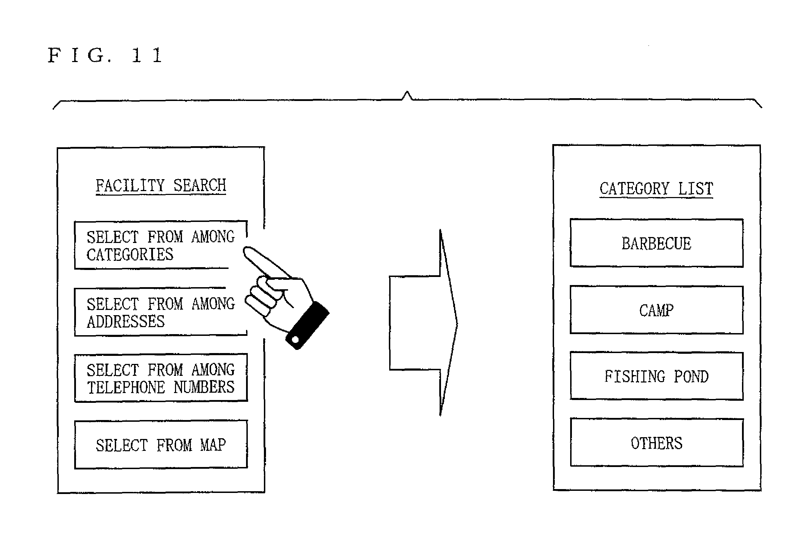

Although in the present embodiment an example where a destination is set using a voice inputted by a user is described, the destination setting assistance apparatus 103b of the present embodiment may be used when a destination is set in another manner. For example, as shown in FIG. 11, a button displayed on a screen may be selected using a remote controller or a touch panel so as to set a destination. As shown on the left hand in FIG. 11, a plurality of facility search methods are displayed, and when "select from among categories" is selected, a list of categories is displayed as shown on the right hand in FIG. 11. In this case, the categories "barbecue" and "camp" selected by the potential category selection section 7021 may be displayed such that the user is able to easily make a selection. For example, as shown in FIG. 11, the selected categories may be displayed above other categories (on the upper portion of a screen), or the selected categories may have displayed characters or graphics thereof larger or more highlighted than other categories, or other categories may not be displayed. The selected categories are displayed such that the same are easily designated as described above, and therefore the user is allowed to save a trouble for setting a destination and to easily find names of the target categories, thereby enabling a destination to be easily set.

Further, although in the present embodiment the potential category selection section 7021 compares items having been loaded in the vehicle V with the items-to-be-carried required for each category so as to select the potential categories, the items having been loaded in the vehicle V may be compared with the items-to-be-carried required for each facility (for example, campsite A or campsite B), instead of each category, so as to select names of the potential facilities or select both the names of the facilities and categories thereof. When the potential categories are selected as in the former case, the vocabulary extraction section 7022 extracts names of categories and names of facilities belonging to each of the categories. In the latter case, names of facilities can be independently extracted. When the potential category selection section 7021 selects the names of the facilities, the display can be performed such that the selected facilities can be easily designated as shown in FIG. 11.

Further, a method for previously giving a degree of importance to each of the items-to-be-carried stored in the items-to-be-carried DB storage section 201 can be used in addition to a method for assigning priorities to the categories based on the degree of matching between the items-to-be-carried required for each of the categories and the items having been loaded. The items having been loaded may include items which are always loaded when visiting a certain destination and items which are kept constantly loaded on a daily basis. "Chair" and "table", which are items-to-be-carried for category "barbecue", maybe kept loaded because, for example, it is troublesome to load the same into and unload the same from the vehicle. However, "notebook PC", which is an item-to-be-carried for "work", is less likely to be loaded in the vehicle for going to destinations other than "work" because, for example, it may be stolen if it is kept loaded in the vehicle. That is, when the loaded items include "chair", "table", and "notebook PC", "camp", "barbecue", and "work" can be selected as the potential category. However, "notebook PC" is loaded only for "work" and therefore it is proper to assign a highest priority to "work". A higher degree of importance is previously given to the items-to-be-carried, such as "notebook PC", having a close connection to the destination which will be visited, and when the items-to-be-carried having the higher degree of importance is loaded, a higher priority may be assigned to the category thereof or the facilities belonging thereto.

As apparent from the above description, the destination setting assistance apparatus 103b according to the present embodiment can select, based on the information of the loaded items, the names of the destinations or the names of the categories which are likely to be set, so as to allow the user to reduce the need to perform operations for setting a destination.

### (Exemplary Application)

Next, an exemplary application of each of the aforementioned embodiments will be described. According to the aforementioned embodiments, described is a method for selecting a potential destination category by using the identification information of items which are loaded in the vehicle at a certain time. In general, some items are kept constantly loaded in a vehicle. For example, a user having a golf bag may constantly leave the golf bag loaded in a vehicle even when the user does not go to a golf course or a practice field because it is troublesome to load the golf bag therein and unload the same therefrom. In this case, by using information indicating whether the item is kept constantly loaded or newly loaded, category selection is able to be made with enhanced accuracy. As an exemplary application, a method in which information relating to a history of the items having been loaded is used to assist the user in setting a destination will be described.

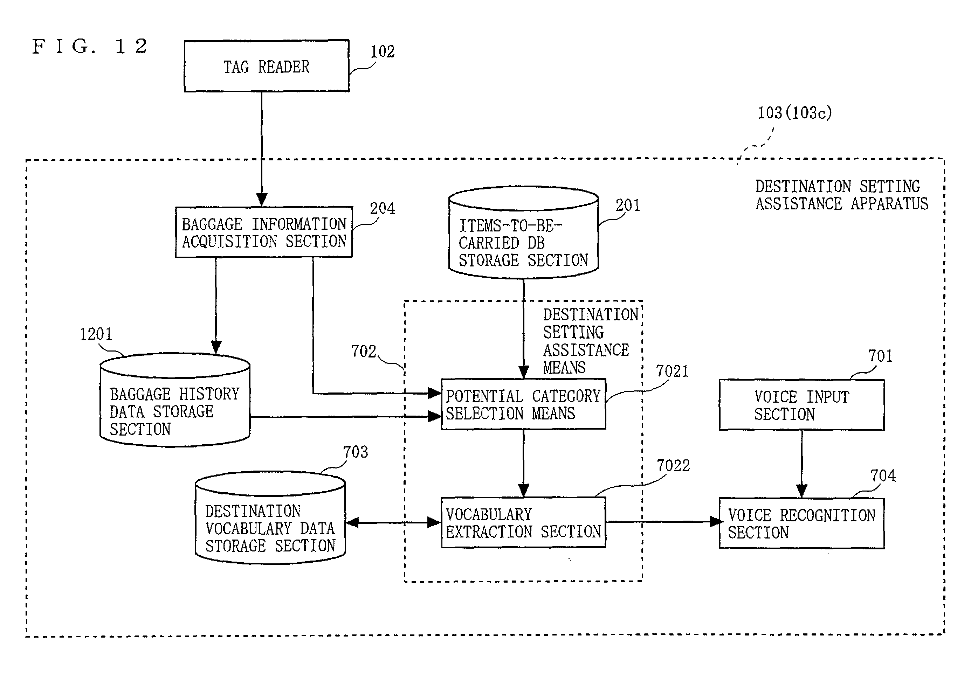

FIG. 12 is a block diagram illustrating an entire structure of the destination setting assistance apparatus 103 (hereinafter, referred to as a destination setting assistance apparatus 103c) according to the present exemplary application. In FIG. 12, the destination setting assistance apparatus 103c is the same as the destination setting assistance apparatus 103b described above except that the destination setting assistance apparatus 103c additionally includes a baggage history data storage section 1201. Except for this, both the destination setting assistance apparatuses 103b and 103c have the same structure. Therefore, in FIG. 12, the same reference numerals as those used in FIG. 7 denote the corresponding components as those shown in FIG. 7, and the description thereof is not given.

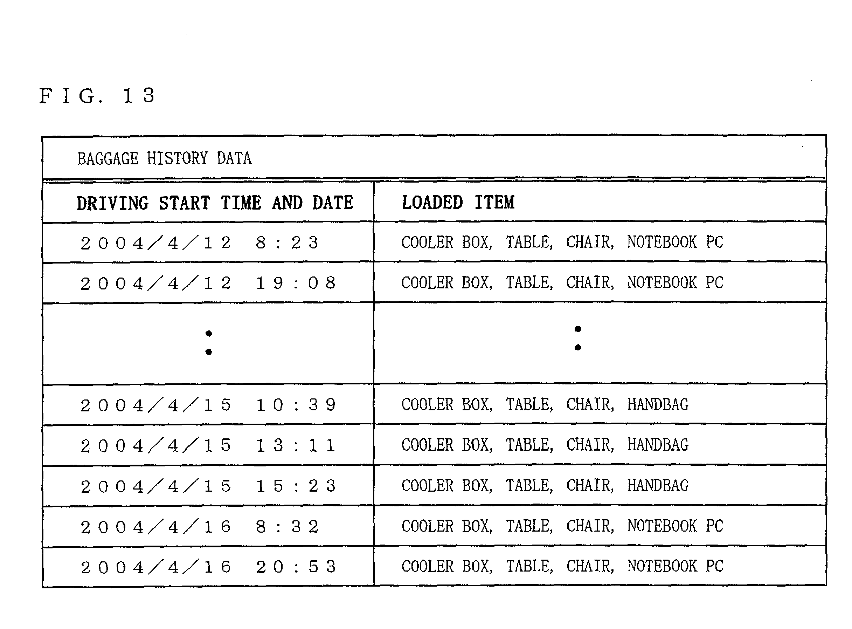

In FIG. 12, the baggage history data storage section 1201 stores history information of items loaded in the vehicle V (refer to FIG. 1). Specifically, as shown in FIG. 13, the baggage history data storage section 1201 stores information (hereinafter, referred to as loaded item information) relating to the items loaded in the vehicle V at a time and date at which the user used the vehicle V or the destination setting assistance apparatus 103c, in units of information (hereinafter, referred to as time and date information) relating to the time and date at which the user used the vehicle V or the destination setting assistance apparatus 103c. As specific examples, the history information shown in FIG. 13 indicates that "cooler box", "table", "chair" and "notebook PC" were loaded in the vehicle V as the loaded items when driving was started at 8:23 am on April 12, 2004. Further, another combination of the time and date information and the loaded item information indicates that the "cooler box", "table", "chair" and "handbag" were loaded in the vehicle V when driving was started at 10:39 am on April 15, 2004. Although in the above description the time and date information represents a time and date at which driving the vehicle V is started, the present invention is not limited thereto. The time and date information may represent a time and date at which an engine of the vehicle V is started or a time and date at which the vehicle V starts to run, or a time and date at which the destination setting assistance apparatus 103c of the present exemplary application is powered on.

The potential category selection section 7021 of the present exemplary application determines a potential category by using the history information stored in the baggage history data 1201 in addition to the identification information and the items-to-be-carried DB as described above. For example, the history information indicates that items which were loaded in the vehicle V at 8: 05 am on April 17 are "cooler box", "table", "chair", "racket" and "shoes". Further, the potential category selection section 7021 gives, to an item which is newly loaded, the degree of importance higher than a reference. That is, while "cooler box", "table" and "chair" have been kept loaded, "racket" and "shoes" were not previously loaded but newly and currently loaded. Therefore, the degrees of importance given to the two items are set higher. As a result, the potential category selection section 7021 is allowed to assign a higher priority to the category "tennis" for which required are "racket" and "shoes" corresponding to the loaded items to which the higher degrees of importance are given, among the categories "camp", "barbecue" and "tennis" which are selected based on the identification information and the items-to-be-carried DB.

"Newly loaded" as described above refers to not only "loaded in the vehicle V for the first time" but also "having not been loaded in the vehicle V in the past several drivings but is currently loaded".

The baggage history data 1201 may further store information relating to the destination of the vehicle V for each time and date information. Thus, when the destination associated with information relating to each of the items loaded for the destination is stored, it is possible to automatically register, in a list, the destination and each of the loaded items in accordance with the number of times each of the items was loaded for the destination as described in the first embodiment so as to allow an extraction of correlation between the destination and each of the loaded items. Further, based on the correlation information having been thus extracted, the degrees of importance are given to the items-to-be-carried for the destinations. For example, if a bag B was loaded in the vehicle V ten times and a bag C was loaded therein five times in a case where a destination A was visited ten times in the past, a higher degree of importance is given to the bag B than the bag C. The destination setting assistance apparatus 103c incorporates an items-to-be-carried DB editing function of registering in and/or adding to the items-to-be-carried DB storage section 201, items-to-be-carried required for a destination or a category, based on the history as described above, and enabling the edition of the items-to-be-carried DB storage section 201, so that a trouble for setting a destination by manual input can be saved, thereby enhancing an efficiency.

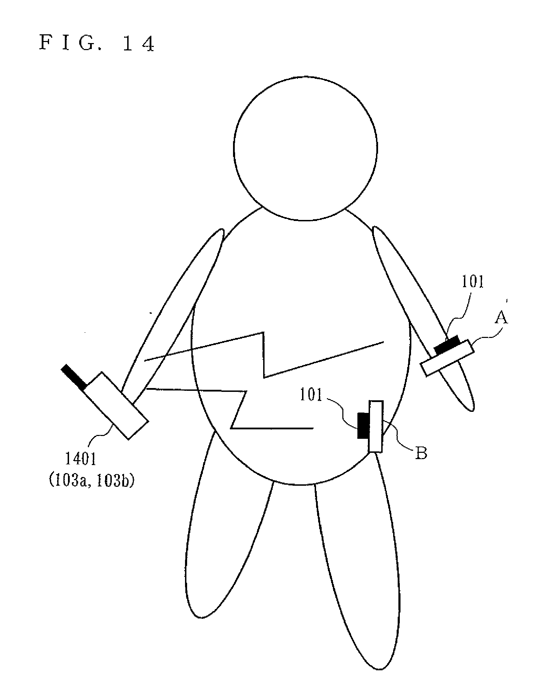

Further, according to the first and the second embodiments, the destination setting assistance apparatuses 103a and 103b are mounted in the vehicle V. In recent years, some mobile terminal apparatus (for example, a mobile telephone or a PDA (Personal Digital Assistant)) incorporates a navigation function using a GPS (Global Positioning System). As shown in FIG. 14, when a mobile terminal apparatus 1401 is capable of acquiring the identification information from at least one RFID tag 101 (two are shown) attached to the item-to-be-carried (for example, two items-to-be-carried A and B) which is carried by putting the same on a body or in a bag or a pocket by a user holding the mobile terminal apparatus 1401, the destination setting assistance apparatuses 103a and 103b according to the first and the second embodiments can be applied to the mobile terminal apparatus 1401. In this case, the tag reader 102 (see FIG. 1) may be incorporated in the mobile terminal apparatus 1401 or may be constructed so as to be capable of communicating with the mobile terminal apparatus 1401.

Further, each of the destination setting assistance apparatuses 103a, 103b, and 103c as described above may be structured as hardware or software. In the case of software, each of the destination setting assistance apparatuses 103a, 103b and 103c comprises a processor, a ROM and a work area. The ROM stores a computer program having written therein an operation process of the processor so as to realize each of the destination setting assistance apparatuses 103a, 103b, and 103c. The processor executes the computer program using the work area so as to function as the destination setting assistance apparatus 103a, 103b, or 103c.

Further, the computer program as described above may be provided which is stored in a storage medium typified by a CD-ROM or stored in a server apparatus connected to a communication network such that the terminal apparatus can download the computer program.

### INDUSTRIAL APPLICABILITY

The destination setting assistance apparatus according to the present invention is applicable to an in-vehicle navigation apparatus, a mobile terminal apparatus such as a mobile telephone and a PDA, or the like, which is required to allow a user to reduce trouble for setting a destination.

## Claims

1. A destination setting assistance apparatus comprising:
a baggage information acquisition section for acquiring identification information relating to one of items loaded in a mobile unit and items carried by a user;
an items-to-be-carried DB storage section for storing an items-to-be-carried database having written therein items-to-be-carried relating to destinations and/or categories thereof;
a destination setting assistance section for assisting in an operation for setting the destinations by using the identification information having been acquired by the baggage information acquisition section and the items-to-be-carried database stored in the items-to-be-carried DB storage section; and
a route setting section for setting a route to one of the destinations, which is set with assistance of the destination setting assistance section.

2. The destination setting assistance apparatus according to claim 1, further comprising
a destination information acquisition section for acquiring destination information relating to the destinations, wherein
the destination setting assistance section includes
a missing item identification section for identifying a missing item for a corresponding one of the destinations to which the destination information currently acquired relates and which will be visited by one of the mobile unit and the user, by using the destination information having been acquired by the destination information acquisition section, the identification information having been acquired by the baggage information acquisitionsection, and the items-to-be-carried database stored in the items-to-be-carried DB storage section, and
a display content determination section for determining information to be displayed, the information relating to the missing item having been identified by the missing item identification section.

3. The destination setting assistance apparatus according to claim 2, wherein
the display content determination section determines that displayed is information indicating that the route through a facility at which the missing item is able to be supplied is settable, and
the destination setting assistance apparatus further comprises a display section for displaying the information having been determined by the display content determination section.

4. The destination setting assistance apparatus according to claim 3, wherein the route setting section sets the route through the facility at which the missing item having been identified by the missing item identification section is able to be supplied.

5. The destination setting assistance apparatus according to claim 2, wherein the display content determination section determines that displayed is information relating to the destinations and/or the categories thereof in which one of only the items loaded in the mobile unit and only the items carried by the user are required when utilized.

6. The destination setting assistance apparatus according to claim 5, wherein the route setting section sets the route to the destinations in which one of only the items loaded in the mobile unit and only the items carried by the user are required when utilized.

7. The destination setting assistance apparatus according to claim 1, further comprising
a destination vocabulary data storage section for storing vocabularies relating to names of the destinations, wherein
the destination setting assistance section includes
a potential category selection section for selecting, from the items-to-be-carried database, at least one of the destinations which are likely to be visited by one of the mobile unit and the user, and/or at least one of the categories of the destinations which are likely to be visited by one of the mobile unit and the user, in accordance with a degree of a matching between the items-to-be-carried written in the items-to-be-carried database and one of the items loaded in the mobile unit and the items carried by the user, based on the identification information having been acquired by the baggage information acquisition section, and the items-to-be-carried database stored in the items-to-be-carried DB storage section, and
a vocabulary extraction section for extracting, from the destination vocabulary data storage section, the vocabularies relating to the names of the destinations based on the destinations having been selected by the potential category selection section and/or the categories of the destinations having been selected by the potential category selection section.

8. The destination setting assistance apparatus according to claim 7, further comprising
a voice recognition section for recognizing a voice inputted by the user, wherein
the voice recognition section assigns a high priority to the vocabularies having been extracted by the vocabulary extraction section such that the vocabularies having been extracted are easily recognized.

9. The destination setting assistance apparatus according to claim 7, further comprising a display section for displaying, to the user, the destinations having been selected by the potential category selection section and/or the categories of the destinations having been selected by the potential category selection section more preferentially than destinations having not been selected and/or categories of the destinations having not been selected.

10. The destination setting assistance apparatus according to claim 9, wherein the display section has a screen on which the destinations having been selected by the potential category selection section and/or the categories of the destinations having been selected by the potential category selection section are displayed above the destinations having not been selected and/or the categories of the destinations having not been selected.

11. The destination setting assistance apparatus according to claim 7, further comprising a display section for displaying, to the user, only the destinations having been selected by the potential category selection section and/or the categories of the destinations having been selected by the potential category selection section without displaying destinations having not been selected and/or categories of the destinations having not been selected.

12. The destination setting assistance apparatus according to claim 7, wherein
a degree of an importance is given to each of the items-to-be-carried written in the items-to-be-Carried database stored in the items-to-be-carried DB storage section, and
the potential category selection section selects, based on the degree of the importance given to each of the items-to-be-carried, the destinations which are likely to be visited by one of the mobile unit and the user, and/or the categories of the destinations which are likely to be visited by one of the mobile unit and the user.

13. The destination setting assistance apparatus according to claim 12, further comprising
a baggage history data storage section for storing baggage history data representing a history of one of the items loaded in the mobile unit and the items carried by the user, wherein
a relatively high degree of the importance is given to one of an item which is most recently loaded in the mobile unit and an item which is most recently carried by the user, among the items-to-be-carried written in the items-to-be-carried database stored in the items-to-be-carried DB storage section.

14. The destination setting assistance apparatus according to claim 1, further comprising
a baggage history data storage section for storing baggage history data representing the destinations having been visited and/or the categories of the destinations having been visited, in association with one of the items loaded in the mobile unit and the items carried by the user, and
an items-to-be-carried DB edition section for extracting a relationship of an item with respect to each of the destinations and/or each of the categories thereof, based on a frequency with which the item was carried for each of the destinations and/or each of the categories thereof, by using the baggage history data stored in the baggage data storage section, and editing, based on the relationship having been extracted, the items-to-be-carried database stored in the items-to-be-carried DB storage section.

15. A destination setting assistance method for assisting, by using an items-to-be-carried database in which items-to-be-carried relating to destinations and/or categories thereof are previously written, a user in setting the destinations, the destination setting assistance method comprising:
a baggage information acquisition step of acquiring identification information relating to one of items loaded in a mobile unit and items carried by the user;
a destination setting assistance step of assisting in an operation for setting the destinations by using the identification information having been acquired by the baggage information acquisition step and the items-to-be-carried written in the items-to-be-carried database; and
a route setting step of setting a route to one of the destinations, which is set with assistance of the destination setting assistance step.

16. A computer program for assisting, by using an items-to-be-carried database in which items-to-be-carried relating to destinations and/or categories thereof are previously written, a user in setting the destinations, the computer program comprising:
a baggage information acquisition step of acquiring identification information relating to one of items loaded in a mobile unit and items carried by the user;
a destination setting assistance step of assisting in an operation for setting the destinations by using the identification information having been acquired by the baggage information acquisition step and the items-to-be-carried written in the items-to-be-carried database; and
a route setting step of setting a route to one of the destinations, which is set with assistance of the destination setting assistance step.

17. The computer program according to claim 16, wherein the computer program is recorded in a storage medium.
